# EUROPÄISCHE PATENTSCHRIFT

(11) **EP 0 818 101 B1**
(45) Veröffentlichungstag und Bekanntmachung des Hinweises auf die Patenterteilung: **22.10.2003**
(21) Anmeldenummer: 96945736.5
(22) Anmeldetag: 19.11.1996
(51) Int. Cl.: H04M 1/00

(54) **TELEKOMMUNIKATIONSENDGERÄT MIT OPTISCHER SIGNALISIERVORRICHTUNG**
TELECOMMUNICATIONS TERMINAL WITH AN OPTICAL SIGNALLING DEVICE
TERMINAL DE TELECOMMUNICATIONS A DISPOSITIF DE SIGNALISATION OPTIQUE

(30) Priorität: 25.01.1996 DE 19602612
(43) Veröffentlichungstag der Anmeldung: 14.01.1998
(73) Patentinhaber: Tenovis GmbH & Co. KG, 60362 Frankfurt am Main (DE)
(72) Erfinder: MAUER, Joachim, D-63263 Neu-Isenburg (DE)
(74) Vertreter: Heinze, Ekkehard, Dipl.-Phys. Dr.
(86) Internationale Anmeldenummer: DE9602200
(87) Internationale Veröffentlichungsnummer: WO97027696

(56) Entgegenhaltungen:
- US-A- 4 648 109
- US-A- 5 280 523
- EDN ELECTRICAL DESIGN NEWS, Bd. 35, Nr. 26, 20.Dezember 1990, NEWTON , MA , US , Seite 153/154 XP000110549 BAYERN : "PHONE FLASHER BYPASSES MESSAGE FEATURE"

## Beschreibung

### Stand der Technik

Die Erfindung geht von einem Telekommunikationsendgerät nach der Gattung des Hauptanspruches aus. Aus der EP 0526 715 A 1 ist eine Auflage für einen Fernsprechhandapparat bekannt, bei der es durch die Verwendung eines durchscheinenden oder durchsichtigen Materials möglich ist, einen Teller und evtl. auch einen Zapfen zur Halterung des Handapparates durch eine im Inneren des Fernsprechapparates entsprechend angeordnete Lichtquelle zu beleuchten. Dies kann beispielsweise dauernd geschehen, oder auch zur optischen Signalisierung eines Anrufs verwendet werden.

Aus US-5 280 523, US 4 648 109 und den Dokument "EDN, No 26, 20. 12. 90, Newton, MA, US, Bayern. K.: Phone flasher bypasses message feature" sind andere, Leuchtdiode enthaltende Schaltkreise zur Signalisierung eines Anrufs bzw. einer Nachricht bekannt.

### Vorteile der Erfindung

Das erfindungsgemäße Telekommunikationsendgerät mit den Merkmalen des Hauptanspruches hat demgegenüber den Vorteil, daß die optische Signalisiervorrichtung nicht nur die Anrufsignalisierung zuläßt, sondern für mehrere Signalisierungen verwendbar ist.

Durch die in den Unteransprüchen aufgeführten Maßnahmen sind vorteilhafte Weiterbildungen und Verbesserungen des im Hauptanspruch angegebenen Telekommunikations-Endgerätes möglich.

Vorteilhaft gemäß Anspruch 2 ist die Verwendung eines Brückengleichrichters, wodurch die optische Signalisiervorrichtung sowohl bei positiven als auch bei negativen Halbwellen der Rufwechselspannung ohne Unterbrechung aktivierbar ist.

Durch die Verwendung von lichtemittierenden Elementen, insbesondere von Leuchtdioden, für die optische Signalisiervorrichtung, gemäß den Ansprüchen 3 und 4, ist eine einfache, wenig Aufwand und Kosten verursachende Möglichkeit zur optischen Signalisierung gegeben.

Vorteilhaft gemäß Anspruch 5 ist die Verwendung des RC-Gliedes, wodurch die bei der optischen Anrufsignalisierung benötigte Gleichstromentkopplung bewirkt wird.

Vorteilhaft nach Anspruch 6 ist der Anschluß eines Tonrufgenerators an die Anode der 3. Diode. Dadurch wird parallel zur optischen Anrufsignalisierung eine akustische Anrufsignalisierung ermöglicht, die durch die Sperrwirkung der 3. Diode bei anderen Signalisierungen und entsprechender Polarität der beiden Adern der Teilnehmeranschlußleitung ausgeschaltet bleibt.

Vorteilhaft nach Anspruch 7 ist die Verwendung eines 2. Gabelumschaltkontaktes. Dadurch wird eine wenig aufwendige und gleichzeitige Abschaltung einer akustischen und optischen Signalisierung ermöglicht.

Durch die Synchronisierung der beiden Gabelumschaltkontakte gemäß Anspruch 8 wird vorteilhaft eine definierte Umschaltung von der Signalisierung auf Sprechbetrieb ermöglicht.

Durch die Strombegrenzung gemäß Anspruch 9 wird das lichtemittierende Element vor übermaßiger Erwärmung bzw. Zerstörung geschützt.

### Zeichnung

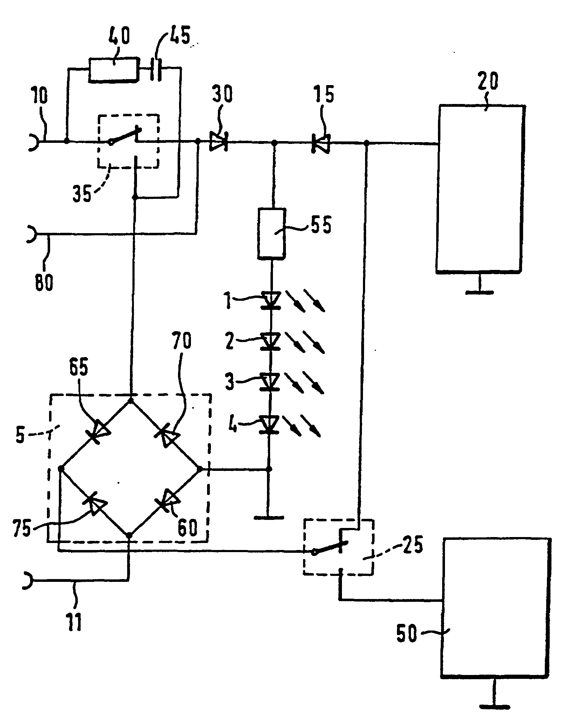

Ein Ausführungsbeispiel der Erfindung ist in der Zeichnung dargestellt und in der nachfolgenden Beschreibung näher erläutert. Es zeigt die einzige Figur einen Schaltplan zur Ansteuerung einer optischen Signalisiervorrichtung.

### Beschreibung des Ausführungsbeispieles

In der Figur kennzeichnet 10 eine erste Ader einer Teilnehmeranschlußleitung 10, 11, die über einen ersten Gabelumschaltkontakt 35 mit der Anode einer ersten Diode 30 verbunden ist. Die Kathode der ersten Diode 30 ist über einen ersten Widerstand 55 mit der Anode einer ersten Leuchtdiode 1 verbunden. Der ersten Leuchtdiode 1 sind eine zweite Leuchtdiode 2, eine dritte Leuchtdiode 3 und eine vierte Leuchtdiode 4 nachgeschaltet. Die 4 Leuchtdioden 1-4 haben alle die gleiche Polaritätsrichtung. Die Kathode der vierten Leuchtdiode 4 ist mit der Anode einer zweiten Diode 60 verbunden, deren Kathode mit der zweiten Ader 11 der Teilnehmeranschlußleitung 10, 11 verbunden ist. Die Kathode der ersten Diode 30 ist mit der Kathode einer dritten Diode 15 verbunden, deren Anode über einen zweiten Gabelumschaltkontakt 25 mit der Kathode einer vierten Diode 65 verbunden ist. Die Anode der vierten Diode 65 ist über einen Kondensator 45 und einen zweiten Widerstand 40 mit der ersten Ader 10 der Teilnehmeranschlußleitung 10, 11 verbunden. Über den ersten Gabelumschaltkontakt 35 ist die erste Ader 10 entweder mit der Anode der ersten Diode 30 oder mit der Anode der vierten Diode 65 verbindbar. Im letztgenannten Fall wird dabei der zweite Widerstand 40 und der Kondensator 45 kurzgeschlossen. Über den zweiten Gabelumschaltkontakt 25 ist die Kathode der vierten Diode 65 entweder mit der Anode der dritten Diode 15 oder mit einem Sprechkreis 50 verbindbar. An die Anode der dritten Diode 15 ist ein Tonrufgenerator 20 angeschlossen. Mit der Anode der zweiten Diode 60 ist die Anode einer fünften Diode 70 verbunden, deren Kathode mit der Anode der vierten Diode 65 verbunden ist. Mit der Kathode der zweiten Diode 60 ist die Anode einer sechsten Diode 75 verbunden, deren Kathode mit der Kathode der vierten Diode 65 verbunden ist. Über eine Anschlußader 80 ist ein Zusatzgerät an die Anode der ersten Diode 30 anschließbar. Die zweite Diode 60, die vierte Diode 65, die fünfte Diode 70 und die sechste Diode 75 bilden einen Brückengleichrichter 5.

In einem Ruhezustand ist der erste Gabelumschaltkontakt 35 so geschaltet, daß die erste Ader 10 mit der Anode der ersten Diode 30 verbunden ist. Gleichzeitig ist der zweite Gabelumschaltkontakt 25 so geschaltet, daß die Kathode der vierten Diode 65 mit der Anode der dritten Diode 15 verbunden ist. An der ersten Ader 10 liegt zunächst ein negatives Potential von beispielsweise -48 V. Die zweite Ader 11 weist ein höheres Potential von beispielsweise 0 V auf. Die erste Diode 30 ist somit in Sperrrichtung gepolt, so daß weder der Tonrufgenerator 20 noch die 4 Leuchtdioden 1, 2, 3 und 4 über die erste Diode 30 aktiviert werden. Da der Kondensator 45 eine Gleichstromsperre darstellt, ist die optische Signalisiervorrichtung 1, 2, 3, 4 auch nicht über die dritte Diode 15 aktivierbar; genausowenig wie dem Tonrufgenerator 20 über den zweiten Gabelumschaltkontakt 25 Strom zuführbar ist.

Wird nun an die Teilnehmeranschlußleitung 10, 11 eine positive Gleichspannung angelegt, indem beispielsweise das Potential der zweiten Ader 11 gleich bleibt und das Potential der ersten Ader 10 das Vorzeichen wechselt und somit in dem hier betrachteten Beispiel +48 V beträgt, so fließt ein Strom von der ersten Ader 10 über den ersten Gabelumschaltkontakt 35, die erste Diode 30, den ersten Widerstand 55, die 4 Leuchtdioden 1-4 und die zweite Diode 60 zur zweiten Ader 11 und die 4 Leuchtdioden 1-4 leuchten. Der erste Widerstand 55 dient dabei der Strombegrenzung und schützt die 4 Leuchtdioden 1-4 vor Überhitzung bzw. Zerstörung. Wie in der Figur dargestellt, ist die Anode der zweiten Diode 60 mit einem Bezugspotential verbunden, welches so eingestellt sein muß, daß an der zweiten Diode 60 keine Überspannung anliegt und diese Diode somit vor Zerstörung bewahrt wird. Diese durch positive Gleichspannung an der Teilnehmeranschlußleitung 10, 11 hervorgerufene Signalisierung wird beispielsweise als Message-Waiting-Signalisierung verwendet. Sie wird dann aktiviert, wenn eine Nachricht gesendet wurde, z. B. als Mail. Die Signalisierung gibt dem Teilnehmer dann zu erkennen, daß ein solcher Vorgang stattgefunden hat. Auf Grund der Polaritätsrichtung der dritten Diode 15 wird verhindert, daß auch der Tonrufgenerator 20 aktiviert wird. Dasselbe gilt für den Kondensator 45, der weiterhin als Gleichstromsperre wirkt und dadurch einen Stromfluß über die vierte Diode 65 und den zweiten Gabelumschaltkontakt 25 zum Tonrufgenerator 20 verhindert.

Für den Fall eines ankommenden Rufes liegt an der Teilnehmeranschlußleitung 10, 11 eine Rufwechselspannung an, die der Gleichspannung des Ruhezustandes überlagert wird. Durch den Kondensator 45 wird dann der Gleichanteil weggefiltert. Bei ausreichend höherem Potential an der ersten Ader 10 im Vergleich zur zweiten Ader 11, fließt dann ein Strom von der ersten Ader 10 über den zweiten Widerstand 40, den Kondensator 45, die vierte Diode 65, den zweiten Gabelumschaltkontakt 25, die dritte Diode 15, den ersten Widerstand 55, die 4 Leuchtdioden 1-4 und die zweite Diode 60 zur zweiten Ader 11, wobei die 4 Leuchtdioden 1-4 leuchten. Der Tonrufgenerator 20 wird über den zweiten Gabelumschaltkontakt 25 ebenfalls mit Strom versorgt und aktiviert. Für den Fall, daß das Potential an der zweiten Ader 11 ausreichend höher im Vergleich zum Potential an der ersten Ader 10 ist, fließt ein Strom von der zweiten Ader 11 über die sechste Diode 75, den zweiten Gabelumschaltkontakt 25, die dritte Diode 15, den ersten Widerstand 55, die 4 Leuchtdioden 1-4, die fünfte Diode 70, den Kondensator 45 und den zweiten Widerstand 40 zur ersten Ader 10, so daß die 4 Leuchtdioden 1-4 wiederum leuchten. Auch in diesem Fall wird der Tonrufgenerator 20 über den zweiten Gabelumschaltkontakt 25 mit Strom versorgt und aktiviert. Da es sich bei der der Anrufsignalisierung zugrundeliegenden Spannung um eine Wechselspannung handelt, kommt es beim Potential-Übergang an den beiden Adern 10 und 11 der Teilnehmeranschlußleitung 10, 11 zu Spannungswerten, die nicht ausreichen, um die entsprechenden Dioden durchzusteuern. Bei entsprechender Frequenz der Rufwechselspannung und aufgrund der Trägheit der Leuchtdioden 1-4 führt dies jedoch nicht zum Erlöschen der Leuchtdioden 1-4, so daß eine ununterbrochene bzw. durchgehende optische Anrufsignalisierung gewährleistet ist. Übersteigt die Amplitude der Rufwechselspannung betragsmäßig den überlagerten Gleichanteil des Ruhezustandes von hier -48 V in ausreichendem Maß, so ist zeitweise ein Stromfluß von der ersten Ader 10 über den ersten Gabelumschaltkontakt 35, die erste Diode 30, den ersten Widerstand 55, die vier Leuchtdioden 1-4 und die zweite Diode 60 zur zweiten Ader 11 möglich. Dies stört jedoch nicht, da es sich lediglich in einer kurzfristigen Erhöhung der Leuchtdichte auswirkt. Die Leuchtdichte der optischen Signalisiervorrichtung hängt auch von der Anzahl der verwendeten Leuchtdioden ab. Zur optischen Signalisierung reicht natürlich auch eine einzige Leuchtdiode aus, wobei die Leuchtdichte mit steigender Anzahl an Leuchtdioden zunimmt. Als optische Signalisiervorrichtungen sind auch andere lichtemittierende Elemente einsetzbar, wie beispielsweise Glühlampen. Auch sind nicht lichtemittierende Elemente als optische Signalisiervorrichtung denkbar, wie beispielsweise verschiedenfarbige Farbflächen, die je nach Signalisierungsart sichtbar werden und beispielsweise auf einem rotierfähigen Würfel oder einer Kreisscheibe aufgebracht sind, wobei jeweils eine Würfelfläche oder ein Scheibensegment mit einer entsprechenden Farbe beispielsweise über ein Sichtfenster sichtbar ist.

Über die Anschlußader 80 sind Zusatzgeräte an die Anode der ersten Diode 30 anschließbar. Dabei werden an die Anschlußader 80 Zusatzgeräte wie Tonbandgeräte oder Anrufbeantworter angeschaltet, die zur Aufzeichnung eines ankommenden Gespräches bei nichtbetätigtem bzw. im Ruhezustand befindlichen ersten Gabelumschaltkontakt 35 dienen.

Es ist auch denkbar, die fünfte Diode 70 und/oder die sechste Diode 75 wegzulassen, so daß bei ausreichend hohem Potential an der zweiten Ader 11 im Vergleich zur ersten Ader 10 kein Stromfluß durch die 4 Leuchtdioden 1-4 möglich ist. Auf diese Weise würden die 4 Leuchtdioden 1-4 bei der optischen Anrufsignalisierung mit der Frequenz der Rufwechselspannung flackern, so daß eine alternative Art der optischen Signalisierung gegeben wäre. Eine solche Art der Signalisierung hätte den Vorteil, die Aufmerksamkeit des Teilnehmers wirkungsvoller bzw. schneller auf den ankommenden Ruf zu lenken.

Wird nun beispielsweise bei einem ankommenden Ruf der Hörer des Telekommunikationsendgerätes vom Teilnehmer abgehoben, so findet eine synchrone Umschaltung der beiden Gabelumschaltkontakte 25 und 35 statt. Ein über die Anschlußader 80 angeschlossenes Zusatzgerät wird dann von der ersten Ader 10 und damit von der Teilnehmeranschlußleitung 10, 11 getrennt, so daß im Falle von Tonbandgeräten bzw. Anrufbeantwortern keine Gespräche aufgezeichnet werden können und im Falle von Weckern eine Mitverwendung der optischen bzw. akustischen Signalisierung verhindert wird. Die optische Signalisiervorrichtung 1-4 und der Tonrufgenerator 20 werden durch das Umschalten der Gabelumschaltkontakte 25 und 35 außerdem von der Teilnehmeranschlußleitung 10, 11 galvanisch getrennt und somit ausgeschaltet. Gleichzeitig wird der Sprechkreis 50 mit der Teilnehmeranschlußleitung 10, 11 verbunden, so daß der Teilnehmer einen ankommenden Ruf über die hergestellte Sprechverbindung entgegennehmen kann. Da die beiden Gabelumschaltkontakte 25 und 35 miteinander synchronisiert sind, ist ein definiertes Umschalten vom Signalisierungszustand in den Sprechzustand möglich.

## Patentansprüche

1. Telekommunikationsendgerät mit einer optischen Signalisiervorrichtung (1, 2, 3, 4), **dadurch gekennzeichnet, daß** die optische Signalisiervorrichtung (1, 2, 3, 4) einerseits an die Kathode einer ersten Diode (30) angeschlossen ist, wobei die Anode der ersten Diode (30) über einen ersten Gabelumschaltkontakt (35) mit einer ersten Ader (10) einer Teilnebmeranschlußleitung (10, 11) verbindbar ist und andererseits an die Anode einer zweiten Diode (60) angeschlossen ist, wobei die Kathode der zweiten Diode (60) an eine zweite Ader (11) der Teilnehmeranschlußleitung (10, 11) angeschlossen ist und daß zwischen der ersten Diode (30) und der optischen Signalisiervorrichtung (1, 2, 3, 4) die Kathode einer dritten Diode (15) angeschlossen ist, deren Anode über einen zweiten Gabelumschaltkontakt (25) und eine vierte Diode (65) mit gleicher Polaritätsrichtung wie die dritte Diode (15) an die erste Ader (10) anschließbar ist.

2. Telekommunikationsendgerät nach Anspruch 1, **dadurch gekennzeichnet, daß** eine fünfte Diode (70) mit ihrer Anode an die Anode der zweiten Diode (60) und mit ihrer Kathode an die Anode der vierten Diode (65) angeschlossen ist und daß eine sechste Diode (75) mit ihrer Kathode an die Kathode der vierten Diode (65) und mit ihrer Anode an die Kathode der zweiten Diode (60) angeschlossen ist.

3. Telekommunikationsendgerät nach Anspruch 1 oder 2,
**dadurch gekennzeichnet, daß** die optische Signalisiervorrichtung (1, 2, 3, 4) mindestens ein lichtemittierendes Element umfaßt.

4. Telekommunikationsendgerät nach Anspruch 1, 2 oder 3,
**dadurch gekennzeichnet, daß** als lichtemittierendes Element (1, 2, 3, 4) eine Leuchtdiode Verwendung findet.

5. Telekommunikationsendgerät nach einem der Ansprüche 1 bis 4, **dadurch gekennzeichnet, daß** die erste Ader (10) der Teilnehmeranschlußleitung (10, 11) über ein RC-Glied (40, 45) mit der Anode der vierten Diode (65) verbunden ist und daß das RC-Glied (40, 45) durch den zweiten Gabelumschaltkontakt (35) kurzschließbar ist.

6. Telekommunikationsendgerät nach einem der Ansprüche 1 bis 5, **dadurch gekennzeichnet, daß** an die Anode der dritten Diode (15) ein Tonrufgenerator (20) angeschlossen ist.

7. Telekommunikationsendgerät nach einem der Ansprüche 1 bis 6, **dadurch gekennzeichnet, daß** über den zweiten Gabelumschaltkontakt (25) der Tonrufgenerator (20) und die optische Signalisiervorrichtung (1, 2, 3, 4) abschaltbar sind und ein Sprechkreis (50) mit der Teilnehmeranschlußleitung (10, 11) verbindbar ist.

8. Telekommunikationsendgerät nach einem der Ansprüche 1 bis 7, **dadurch gekennzeichnet, daß** die beiden Gabelumschaltkontakte (25, 35) miteinander synchronisiert sind.

9. Telekommunikationsendgerät nach einem der Ansprüche 3 bis 8, **dadurch gekennzeichnet, daß** dem lichtemittierenden Element (1, 2, 3, 4) vorzugsweise ein Widerstand (55) zur Strombegrenzung vorgeschaltet ist.

## Claims

1. A telecommunications terminal including an optical signaling device (1, 2, 3, 4), **characterized in that** the optical signaling device (1, 2, 3, 4), on the one hand, is connected to the cathode of a first diode (30), the anode of said first diode (30) being connectable via a first hookswitch contact (35) to a first lead (10) of a subscriber line (10, 11), and, on the other hand, is connected to the anode of a second diode (60), the cathode of the second diode (60) being connected to a second lead (11) of the subscriber line (10, 11), and **in that** between the first diode (30) and the optical signaling device (1, 2, 3, 4), the cathode of a third diode (15) is connected, the anode of which is connectable via a second hookswitch contact (25) and a fourth diode (65) having the same polarity as the third diode (15) to the first lead (10).

2. The telecommunications terminal according to claim 1, **characterized in that** a fifth diode (70) is connected with its anode to the anode of the second diode (60), and with its cathode is connected to the anode of the fourth diode (65), and **in that** a sixth diode (75) with its cathode is connected to the cathode of the fourth diode (65), and with its anode is connected to the cathode of the second diode (60).

3. The telecommunications terminal according to claims 1 or 2, **characterized in that** the optical signaling device (1, 2, 3, 4) comprises at least one light-emitting element.

4. The telecommunications terminal according to claims 1, 2 or 3, **characterized in that** a light-emitting diode is used as the light-emitting element (1, 2, 3, 4).

5. The telecommunications terminal according to any one of claims 1 through 4, **characterized in that** the first lead (10) of the subscriber line (10, 11) is in connection with the anode of the fourth Diode (65) via an RC element (40, 45), and that the RC element (40, 45) may be short-circuited by the second hookswitch contact (35).

6. The telecommunications terminal according to any one of claims 1 through 5, **characterized in that** a ringing tone generator (20) is connected to the anode of the third diode (15).

7. The telecommunications terminal according to any one of claims 1 through 6, **characterized in that**, via the second hookswitch contact (25), the ringing tone generator (20) and the optical signaling device (1, 2, 3, 4) may be disabled, and a voice circuit (50) may be connected with the subscriber line (10, 11).

8. The telecommunications terminal according to any one of claims 1 through 7, **characterized in that** the two hookswitch contacts (25, 35) are in synchronization with each other.

9. The telecommunications terminal according to any one of claims 3 through 8, **characterized in that** a resistor (55) for current limitation is preferably connected upstream of the light-emitting element (1, 2, 3, 4).

## Revendications

1. Terminal de télécommunication comportant un dispositif (1, 2, 3, 4) de signalisation optique, **caractérisé en ce que** le dispositif (1, 2, 3, 4) de signalisation optique, d'un côté, est raccordé à la cathode d'une première diode (30), l'anode de la première diode (30) pouvant être reliée par un premier contact (35) de commutation de fourche de combiné avec un premier conducteur (10) d'une ligne (10, 11) de raccordement de correspondant et, d'un autre côté, est raccordé à l'anode d'une deuxième diode (60), la cathode de la deuxième diode (60) étant raccordée à un deuxième conducteur (11) de la ligne (10, 11) de raccordement de correspondant et qu'entre la première diode (30) et le dispositif (1, 2, 3, 4) de signalisation optique, la cathode d'une troisième diode (15) est raccordée, dont l'anode, par un deuxième contact (25) de commutation de fourche de combiné et une quatrième diode (65) de même sens de polarité que la troisième diode (15) peut se raccorder au premier conducteur (10).

2. Terminal de télécommunication selon la revendication 1, **caractérisé en ce qu'**une cinquième diode (70) est raccordée par son anode à l'anode de la deuxième diode (60) et par sa cathode à l'anode de la quatrième diode (65) et qu'une sixième diode (75) est raccordée par sa cathode à la cathode de la quatrième diode (65) et par son anode à la cathode de la deuxième diode (60).

3. Terminal de télécommunication selon la revendication 1 ou 2, **caractérisé en ce que** le dispositif (1, 2, 3, 4) de signalisation optique comprend au moins un élément émetteur de lumière.

4. Terminal de télécommunication selon l'une quelconque des revendications 1, 2 ou 3, **caractérisé en ce que**, en tant qu'élément émetteur de lumière, une diode émettant de la lumière trouve son emploi.

5. Terminal de télécommunication selon l'une quelconque des revendications 1 à 4, **caractérisé en ce que** le premier conducteur (10) de la ligne (10, 11) de raccordement de correspondant est raccordé à l'anode de la quatrième diode (65) au travers d'un élément (40, 45) RC et que l'élément (40, 45) RC peut être court-circuité par le deuxième contact (35) de commutation de fourche de combiné.

6. Terminal de télécommunication selon l'une quelconque des revendications 1 à 5, **caractérisé en ce qu'**un générateur (20) de tonalité d'appel est raccordé à l'anode de la troisième diode (15).

7. Terminal de télécommunication selon l'une quelconque des revendications 1 à 6, **caractérisé en ce que**, par le deuxième contact (25) de commutation de fourche de combiné, le générateur (20) de tonalité d'appel et le dispositif (1, 2, 3, 4) de signalisation optique peuvent être débranchés et qu'un cercle (50) de parole peut être relié avec la ligne (10, 11) de raccordement de correspondant.

8. Terminal de télécommunication selon l'une quelconque des revendications 1 à 7, **caractérisé en ce que** les deux contacts (25, 35) de commutation de fourche de combiné sont synchronisés l'un avec l'autre.

9. Terminal de télécommunication selon l'une quelconque des revendications 3 à 8, **caractérisé en ce que**, de manière préférée, une résistance (55) est raccordée en aval de l'élément (1, 2, 3, 4) émetteur de lumière.
